(19) Europäisches Patentamt
European Patent Office
Office européen des brevets

(11) Veröffentlichungsnummer: **0 082 278**
**A1**

# (12) EUROPÄISCHE PATENTANMELDUNG

(21) Anmeldenummer: **82110196.1**

(22) Anmeldetag: **05.11.82**

(51) Int. Cl.³: **C 01 B 21/098**
C 08 G 79/02

(30) Priorität: **11.11.81 DE 3144751**

(43) Veröffentlichungstag der Anmeldung:
**29.06.83 Patentblatt 83/26**

(84) Benannte Vertragsstaaten:
**DE FR GB IT**

(71) Anmelder: **HOECHST AKTIENGESELLSCHAFT**
**Postfach 80 03 20**
**D-6230 Frankfurt/Main 80(DE)**

(72) Erfinder: **Rieck, Hans-Peter, Dr.**
**Staufenstrasse 13a**
**D-6238 Hofheim am Taunus(DE)**

## (54) Verfahren zur Reinigung von cyclischen Chlorphosphazenen.

(57) Oligomere Chlorphosphazene der Formel

$$(N = PClR)_n,$$

wobei n eine ganze Zahl zwischen 3 und 8 ist und R einen Phenylrest, einen $C_1$-$C_6$-Alkylrest oder Chlor bedeutet, werden mit Schwefeldioxid oder mit Schwefeloxidchloriden behandelt und so gereinigt. Beispielsweise wird das Chlorphosphazen mit einem Schwefeloxidchlorid umkristallisiert.

EP 0 082 278 A1

HOECHST AKTIENGESELLSCHAFT HOE 81/F 305 Dr.SP/Fr

Verfahren zur Reinigung von cyclischen Chlorphosphazenen

Die vorliegende Erfindung betrifft ein Verfahren zur Reinigung von cyclischen Chlorphosphazenen, die noch durch Alkyl- oder Phenylgruppen substituiert sein können, durch Behandlung mit Schwefeldioxid oder mit Schwefeloxidchloriden.

Ein Hauptanwendungsgebiet von oligomeren cyclischen Chlorphosphazenen (Oligomerisierungsgrad n = 3 - 8) besteht in deren Polymerisation zu polymeren Chlorphosphazenen, die nach anschließender Umsetzung mit Alkoholaten, insbesondere Perfluoralkoholaten, hydrolysestabile Tieftemperatur-Elastomere ergeben. Die Polymerisation erfolgt bei etwa 250°C und führt zu einem Gemisch, in dem neben dem Polymeren (Polymerisationsgrad m = 3 - 50.000) auch noch das Ausgangsoligomere vorhanden ist. Diese Reaktionen werden durch die folgenden Gleichungen wiedergegeben

$$(NPRCl)_n \longrightarrow \frac{n}{m} (NPRCl)_m$$

$$\frac{1}{m} (NPRCl)_m + NaOR^1 \longrightarrow (NPROR^1)_m + NaCl$$

dabei bedeutet $R^1$ eine Alkyl-, Perfluoralkyl-methyl- oder Arylgruppe. R bedeutet eine Alkyl- oder Arylgruppe oder auch Chlor. In letztem Fall wird bei der Umsetzung mit Alkoholat auch R gegen die $OR^1$-Gruppe ausgetauscht. Die Polymerisation kann sowohl mit reinen Oligomeren, wie auch mit einem Gemisch verschiedener Oligomerer durchgeführt werden.

Oligomere Chlorphosphazene können nach mehreren Methoden gereinigt werden. Beispielsweise ist eine Reinigung durch fraktionierte Kristallisation möglich, wobei als Lösungsmittel insbesondere aliphatische Kohlenwasserstoffe verwendet werden können (H.R. Allcock, Phosphorus-Nitrogen Compounds, New York 1972, S. 309). Jedoch sind auch andere Lösungsmittel im Prinzip geeignet (US-PS 3 378 353). Eine Entfärbung der oligomeren Phosphazene kann mitunter durch Aktivkohle erzielt werden.

Es hat sich gezeigt, daß in vielen Fällen oligomere Chlorphosphazene bei der thermischen Polymerisation zu dunkelbraunen Produkten reagieren, die einen hohen Anteil an Verbindungen enthalten, die in organischen Lösungsmitteln unlöslich sind.

Dies tritt häufig auch dann auf, wenn man von reinen Oligomeren ausgeht, z.B. von einem reinen Trimeren mit einem Reingehalt von 99 oder 99,9 %. Gefordert wird jedoch, daß nur wenig unlösliche Verbindungen gebildet werden und die Farbe des Umsetzungsproduktes hell bleibt. Nur aus einem solchen Umsetzungsprodukt lassen sich durch weitere Reaktion mit Alkoholaten hellgefärbte Tieftemperatur-Elastomere gewinnen, die in der Technik besonders begehrt sind.

Es bestand daher die Aufgabe, ein Verfahren anzugeben, mit dem sich Oligomere auf einfache Weise so reinigen lassen, daß sie bei der Polymerisation brauchbare Massen ergeben. Dieses Verfahren sollte sowohl bei Oligomeren-Gemischen, wie auch bei reinen Oligomeren anwendbar sein.

Es wurde nun ein Verfahren zur Reinigung von oligomeren Chlorphosphazenen der Formel

$$(N = PClR)_n$$

gefunden, wobei n eine ganze Zahl zwischen 3 und 8 ist und R für einen Phenylrest, einen $C_1$-$C_6$-Alkylrest, oder für Chlor steht, das dadurch gekennzeichnet ist, daß das oligomere Chlorphosphazen mit Schwefeldioxid

oder einem Schwefeloxidchlorid behandelt wird.

Mit diesem Verfahren läßt sich eine Farbveränderung bei der nachfolgenden Polymerisation, insbesondere der thermischen Polymerisation, durch Erhitzen des oligomeren Chlorphosphazens, weitgehend unterdrücken oder sehr häufig auch ganz verhindern. Die Behandlung der Chlorphosphazene kann erfolgen durch Einleiten von Schwefeldioxid in Lösungen oder Schmelzen, durch Zugabe der Schwefeloxidchloride zu Lösungen des Phosphazens, durch Lösen des Phosphazens in oder durch Verrühren mit Schwefeloxidchlorid. Bevorzugt ist eine Behandlung in flüssiger Phase.

Als Schwefeloxidchloride werden bevorzugt Thionylchlorid und Sulfurylchlorid eingesetzt, insbesondere Thionylchlorid. Die Verbindungen können in flüssigem oder gasförmigem Zustand in reiner oder verdünnter Form verwendet werden.

Sulfurylchlorid und Thionylchlorid sind nicht brennbar; sie lassen sich wegen ihrer günstigen Siedepunkte von 69°C bzw. 79°C leicht wieder von den cyclischen Chlorphosphazenen abtrennen. Die Temperaturabhängigkeit der Löslichkeit der Chlorphosphazene in den genannten Schwefeloxidchloriden macht diese geeignet als Medium zum Umkristallisieren.

Es ist durchaus sinnvoll, die erfindungsgemäße Behandlung der Chlorphosphazene mit Schwefeloxidchloriden mit anderen Reinigungsmethoden wie Destillation, Auswaschen mit Wasser oder Kristallisation, zu kombinieren. Es ist vorteilhaft, nach der Behandlung mit Schwefeloxidchloriden oder Schwefeldioxid das Chlorphosphazen zu destillieren oder zu sublimieren. Jedoch ist auch eine andere Reihenfolge möglich. Es ist weiterhin vorteilhaft, das Rohphosphazen zunächst mit Wasser zu behandeln, zu trocknen oder zu destillieren und dann das Phosphazen mit Schwefeloxidchloriden oder $SO_2$ zu behandeln. Es ist vorteilhaft, daß die Schwefeloxidchlorde mit Wasser reagieren, d.h. als starke Trocknungsmittel wirken. Vor allem Thionylchlorid ist für diesen Zweck sehr geeignet, da seine Hydrolyseprodukte, $SO_2$ und HCl, als gasförmige Substanzen leicht aus dem Reaktionsgemisch entfernt werden können.

Die Erfindung wird durch die folgenden Beispiele näher erläutert:

Beispiel 1: (Vergleichsbeispiel)

Phosphorpentachlorid und Ammoniumchlorid werden in Chlorbenzol zu einem Gemisch cyclischer Dichlorphosphazene umgesetzt. Das Rohprodukt wird mit Wasser bei 90°C 15 Min. extrahiert, die Chlorbenzol enthaltende Phase wird abgetrennt und das Rohprodukt über eine Füllkörperkolonne fraktioniert destilliert. Man erhält dabei trimeres Dichlorphosphazen $(NPCl_2)_3$ mit einer gaschromatographischen Reinheit $> 99$ %. Davon wird eine Probe bei einem Druck $< 13$ Pa in einem Glasrohr abgeschmolzen und 21 h auf 270 - 280°C erwärmt. Die Probe verfärbt sich nach einer Stunde leicht bräunlich, hat nach 4,5 h eine deutlich hellbraune Farbe und ist zum Schluß tief dunkelbraun. Sie ist während der gesamten Zeit in der Hitze dünnflüssig und erstarrt bei Raumtemperatur zu einem kristallinen Feststoff. Polymerisation erfolgte also nur zu einem sehr geringen Teil.

Beispiel 2:

Destilliertes $(NPCl_2)_3$ aus Beispiel 1 wird mit Thionylchlorid umkristallisiert und, wie in Beispiel 1 beschrieben, in einem Glasrohr abgeschmolzen und

thermisch behandelt. Nach 21 h bei 270 - 280°C hat das Dichlorphosphazen einen ganz leichten Farbstich ins bräunliche. Es ist in der Hitze dünnflüssig und in der Kälte kristallin.

Beispiel 3:

Das aus Thionylchlorid umkristallisierte Phosphazen aus Beispiel 2 wird sublimiert und anschließend, wie in Beispiel 1 beschrieben in einem Glasrohr abgeschmolzen und thermisch behandelt. Das Dichlorphosphazen bleibt nach 21 h bei 270 - 280°C völlig farblos, ist in der Hitze eine viskose Flüssigkeit und erstarrt bei Raumtemperatur zu einem durch kristalline Anteile trüben Polymeren.

Beispiel 4:

Destilliertes $(NPCl_2)_3$ aus Beispiel 1 wird in Chlorbenzol gelöst. In die Lösung wird bei 30 - 50°C 15 Min. lang $SO_2$ eingeleitet. Das Lösungsmittel wird im Vakuum abdestilliert, das Phosphazen sublimiert und wie in Beispiel 1 beschrieben behandelt. Das Produkt bleibt auch nach 21 h bei 270 - 280°C völlig farblos, ist auch in der Hitze nicht fließend und nimmt bei Raumtemperatur einen glasartigen Zustand an. Die Polymerisation ist also wesentlich weiter fortgeschritten als in Beisoiel 1.

Beispiel 5:

Zu 10 g Produkt aus Beispiel 3 werden 100 mg $AlCl_3$ gegeben. Die Mischung wird , wie in Beispiel 1 beschrieben, thermisch behandelt. Das Produkt ist nach 21 h bei 270 - 280°C in der Hitze eine stark viskose, leicht bräunliche Flüssigkeit.

Beispiel 6:

Zu 10 g sublimiertem Produkt aus Beispiel 3 werden ca. 10 mg $H_2O$ gegeben. Die M ischung wird wie in Beispiel 1 beschrieben, behandelt. Das Produkt ist nach 21 h bei 270 - 280°C völlig farblos, in der Hitze nicht fließend mit geringen dünnflüssigen Anteilen.

Beispiel 7:

Methyldichlorphosphan, Chlor und Ammoniumchlorid werden gemäß DE-OS 2 940 389 zu einem Gemisch oligomerer Methylchlorphosphazene, $(NPCH_3Cl)_n$, umgesetzt. Das Produkt enthält auch geringe Anteile eines Methylchlorphosphazens, bei dem ein kleiner Teil der Wasserstoffatome durch Chlor ersetzt ist. Das Produktgemisch wird mit Thionylchlorid umkristllisiert, der Feststoff bei 13 Pa sublimiert, bei gleichem Druck in einem Glasrohr abgeschmolzen und anschließend auf 230°C erwärmt. Das Produkt verfärbt sich nur langsam. Wenn dagegen das Methylchlorphosphazen nicht aus Thionylchlorid, sondern aus einem anderen Lösungsmittel, wie Heptan, umkristallisiert wird, so kommt es bei der thermischen Polymerisation rasch zu einer tieferen Verfärbung.

1. Verfahren zur Reinigung von oligomeren Chlorphosphazenen der Formel

$$(N = PClR)_n,$$

wobei n eine ganze Zahl zwischen 3 und 8 ist und R einen Phenylrest, einen $C_1$-$C_6$-Alkylrest oder Chlor bedeutet, dadurch gekennzeichnet, daß das Chlorphosphazen mit Schwefeldioxid oder mit Schwefeloxidchloriden behandelt wird.

2. Verfahren nach Anspruch 1, dadurch gekennzeichnet, daß das Chlorphosphazen mit einem Schwefeloxidchlorid umkristallisiert wird.

3. Verfahren nach Anspruch 1 oder 2, dadurch gekennzeichnet, daß das Schwefeloxidchlorid Thionylchlorid ist.

0082278

Europäisches Patentamt

**EUROPÄISCHER RECHERCHENBERICHT**

Nummer der Anmeldung

EP 82 11 0196

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | C 01 B 21/098<br>C 08 G 79/02 |
| P,A | EP-A-0 046 584 (FIRESTONE TIRE) | | |
| | --- | | |
| A | EP-A-0 004 878 (FIRESTONE TIRE) | | |
| | --- | | |
| D,A | US-A-3 378 353 (C.H.G. HANDS) | | |
| | ----- | | |
| | | | RECHERCHIERTE SACHGEBIETE (Int. Cl. ³) |
| | | | C 01 B 21/00<br>C 08 G 79/00<br>C 07 F 9/00 |

Der vorliegende Recherchenbericht wurde für alle Patentansprüche erstellt.

| Recherchenort | Abschlußdatum der Recherche | Prüfer |
|---|---|---|
| BERLIN | 16-02-1983 | KESTEN W |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82